# EUROPEAN PATENT SPECIFICATION

(11) **EP 0 970 469 B1**
(45) Date of publication and mention of the grant of the patent: **11.12.2002**
(21) Application number: 98912997.8
(22) Date of filing: 19.03.1998
(51) Int. Cl.: G11B 7/24, G11B 7/26, G11B 23/40

(54) **CUSTOMIZED GRAPHICS FOR OPTICAL DISCS**
ANWENDERSPEZIFISCHE GRAPHIKEN FÜR OPTISCHE PLATTEN
GRAPHIQUES SUR MESURE POUR DISQUES OPTIQUES

(30) Priority: 20.03.1997 US 821240
(43) Date of publication of application: 12.01.2000
(73) Proprietor: Imation Corp., St. Paul, Minnesota 55164-0898 (US)
(72) Inventor: BAHNS, Ted, L., Saint Paul, MN 55164-0898 (US)
(74) Representative: VOSSIUS & PARTNER
(86) International application number: US9805512
(87) International publication number: WO98041983

(56) References cited:
- EP-A- 0 682 341
- EP-A- 0 762 407
- EP-A- 0 818 782
- WO-A-94/10684
- US-A- 5 346 654
- US-A- 5 452 282

## Description

### Technical Field

The present invention relates generally to optical discs. In particular, the present invention includes an optical disc having high-contrast images within the disc information area, and a method of forming such discs. The method may include forming high-contrast images into the diffraction grating in lead-out areas of a pre-recorded master optical disc using an image mask.

### Background of the Invention

Optical discs, such as CD-ROM (Compact Disc-Read Only Memory) or DVD (Digital Versatile Disc or Digital Video Disc) media, have data stored as a series of lower "pits" formed within a plane of higher "lands". The pits are arranged in a spiral track originating at the disc center hub and ending at the disc outer rim. The data may be considered to lie in a series of tracks spaced radially from the center hub.

The track typically begins in a "pre-user data" area near the center hub. The pre-user area contains descriptor information of the disc itself. A "user-data" area follows the pre-user data area, and contains the data of the disc. A "lead-out" area follows the user-data area, lying closer to the outer edge of the disc. The lead-out area contains no user data, but may contain a pattern of pits which can be a repeating pattern or a random pattern having no data readout value or information content. The pre-user data area, user-data area, and lead-out area collectively comprise the "information area" of the disc.

The information content is encoded in the length of the slightly arcuate, circumferential pits. Microscopically, the track consists of a series of pits. When viewed with the naked eye, the aligned pits appear to form a continual groove, with the spiral groove forming a diffraction grating. The diffraction grating reflects light of varying colors, as described by Bragg's law.

In the lead-out area, the spiral track may be a continuous spiral groove, having a very long pit, formed not for information content but for appearance. Thus, while the optical disc may contain a spiral pattern to the outer rim, there may be very little user-data present, with the lead-out area comprising a majority of the disc surface in a sparsely populated disc. In even a fully populated disc, the lead-out area comprises a few millimeters near the outer rim.

A master optical disc is typically manufactured by coating a glass substrate with a photosensitive layer (e.g., photoresist), followed by baking the coated substrate. A laser is thereafter used to expose portions of the photoresist in a spiral pattern of circumferential arcs of varying length, corresponding to the later formed pits. The master disc is thereafter developed, with the exposed areas being washed away, forming pits. The unexposed areas remain, forming a plane of higher "lands." As such, the master disc is said to be a "pre-recorded" optical disc. For example, pre-recorded optical media may include CD-ROM, DVD, laser vision, etc.

The master disc is used as a mold to form one or more harder, metallised, "stampers", having bumps corresponding to the pits in the master disc. The stampers are used to form the optical discs via injection molding, the final discs having pits corresponding to the bumps in the stampers corresponding to the pits in the master disc.

In CD-ROMs, the readable side includes a transparent polycarbonate bottom layer having the reflective layer thereover, which in turn has a protective "lacquer" layer thereover, which can include a label. The readable side is typically placed face down over a laser reader which penetrates the transparent layer to the single reflective layer having pits. As an example, in pre-recorded media, pits are formed in such a way to give a high contrast signal relative to the land.

DVDs are optical discs having increased capacity relative to CD-ROMs. In one example, this is achieved in part by having double sided discs. Double sided DVDs have two reflective layers, each facing outward, requiring flipping the disc to read each side or an additional device to read the second side. Double sided media such as DVDs require each side to be transparent, and thus have a special labelling requirement, as covering one side with lacquer and label is no longer possible. Any label or image on the disc must be both visible, and transparent to a laser in the region containing data.

Labelling of the previously described optical discs is important. Labelling can operate as a deterrent to piracy. The data on optical discs, being digital, can be read perfectly, and reproduced perfectly, in unlimited quantities. Standard printed labels on the lacquer side of CD-ROMs can also easily be reproduced, using techniques similar to those used to produce the original labels. Labelling requiring the creation of art-work on the master discs or stampers themselves would require significantly more effort and/or specialized equipment to produce copies capable of passing as the original discs.

One known method of labeling optical discs is described in U.S. Patent No. 5,607,188, issued March 4, 1997, entitled "Marking of Optical Disc for Customized Identification". The above referenced patent includes an optical disc which is labeled by incorporating a low contrast image, such as a "watermark"; into the optical disc substrate. The image is a low contrast image which is located in the user-data area of the disc and includes optically readable data encoded therein.

In one known optical disc described in WO 94/10684, an optically readable information disc is suggested which includes an optically transparent disc-shaped substrate including concentric data in hologram areas. The data area contains an optically viewable information signal. The hologram area contains at least one visible, ornamental hologram.

US-A-5 608 718 discloses a disc with an optically viewable image in the information area including lead-out area by reducing the hight of the loads up to a maximum of 30%. Outside that area the reduction can have any value.

It would be desirable to mark a disc in a way that would identify a disc as being authentic, that is, as having been manufactured by an authorized source. It is desirable to have an optical disc, which includes high-contrast images, such as a logo, alphanumeric characters or symbols, in the information area of the disc. Further, it is desirable to have a method for high-contrast labeling or putting high-contrast images within the information area of the disc which is accomplished at the master disc level and does not require the use of laser technology.

### Summary of the Invention

The present invention is an optical disc having high-contrast images in the information area of the disc and a method for creating high-contrast images in the information area of optical discs as recited in the claims. The present invention, including a method of creating high-contrast images in the lead-out area of master optical discs, may include using an image mask and a light source.

In one preferred embodiment, the present invention includes an optical disc having high-contrast images formed therein. The optical disc includes an information area, wherein the information area is defined as an area capable of containing data readable by an optical disc player. An optically viewable high-contrast image is formed within the information area. The information area includes a plurality of lands and pits, wherein the optically viewable high-contrast image is defined by an absence of lands located within the area including lands and pits. Further, user data may be contained within the information area. In one embodiment, the user data is located adjacent the high-contrast image.

The information area includes a data content area and a lead-out area, wherein the optically viewable high-contrast image is located within the lead-out area. The information area may further comprise a pre-user data area. In one embodiment, the user data is located within the data content area.

The method can include providing a glass substrate covered by a photosensitive layer. In one embodiment, a diffraction pattern mask having a spiral pattern or pattern of concentric circles is used as a pattern mask. In another embodiment, a random pattern of dots is used as a pattern mask. The pattern mask is interposed between the master disc and a light source, and the photosensitive layer exposed for a desired period of time to lead to a subsequent pattern on the master disc. Light is then projected through an image mask onto the photosensitive layer, for a sufficient duration to lead to subsequent total or nearly total removal of the photosensitive layer down to the substrate level. The exposed master disc is developed, removing the photosensitive layer in areas corresponding to the pattern and image masks. In one embodiment, the pattern and image masks are combined.

The resulting master disc, in a single sided embodiment, can have an information area including an inner pre-user data area, a user-data area, and an outer lead-out area. The image may be located within the information area, and in particular may be located within the lead-out area. The user-data consists of circumferential pits within the photosensitive layer, lying along a spiral path, resembling a continuous spiral. The high-contrast image can consist of areas in the diffraction pattern where the diffraction pattern grating is removed, substantially down to the glass substrate level, and/or even with the bottom of the master data pits.

The resulting high-contrast images are easier to read to the unaided eye than aforementioned low contrast images within the user-data area. The high-contrast images may be used on the sparsely populated side of a double sided disc to list the disc contents. The images may also be used as a difficult to reproduce indicia of origin, for making counterfeiting more difficult. The method of producing a master disc having a high-contrast image located within the information area does not require the use of a time consuming laser process for burning the image therein.

### Brief Description of the Drawings

Other objects of the present invention and many of the attendant advantages of the present invention will be readily appreciated as the same becomes better understood by reference to the following detailed description when considered in connection with the accompanying drawings, in which like reference numerals designate like parts throughout the figures thereof, and wherein:
Figure 1 is a plan view of a readable side of an optical disc having a high-contrast image in the information area of the disc;
Figure 2 is a partial cross-sectional view taken along line 2-2 of Figure 1;
Figure 2A is a partial cross-sectional view taken along line 2-2 of Figure 1, showing a dual sided optical disc having high-contrast images located within the information area in accordance with the present invention;
Figure 3 is a diagram illustrating a step in the method of creating a master disc in accordance with the present invention;
Figure 4 is a diagram illustrating another step in the method of creating a master disc in accordance with the present invention;
Figure 5 is a cross-sectional view of the master disc of Figures 3 and 4 after developing; and
Figure 6 is a diagram illustrating another method of creating a master disc in accordance with the present invention.

### Detailed Description of the Preferred Embodiments

Although a CD ROM optical disc is used in the exemplary embodiment described herein, it is recognized that the field to which this invention pertains includes all types of optical data discs having information contained in data structures therein as data features, and the referenced plan for the data features. In various formats of optical data discs, the data features may include data pits, grooves, bumps or ridges, and lands or land area in between. This includes current formats of audio CD, CD-R, CD-ROM, and video discs, DVD, as well as future formats which use data features described herein. The definition of optical discs also includes various types of magneto-optical discs, which commonly use data features, such as grooves or pits, for tracking and address identification, even though data is subsequently recorded magneto-optically.

As previously described herein, the production of optical data discs usually includes the three general steps of producing a master, a stamper, and the replicas, which are the final product. Although there are variations in specifics of processing steps, these three steps are almost always involved. The master is often made on a glass disc coated with photoresist, and exposed by a modulated laser beam which writes the data on the master by selectively exposing areas of the photoresist, which, after development, become the optically encoded data features with respect to a reference plane which may be formed by the unexposed areas. A stamper is then made from the master, having a mirror-image pattern of the data features. The stamper is then used to mass produce the replicas, by various injection molding or pressing processes. Each replica disc has the same data patterns which were originally created on the master disc (or their inverse, i.e., bumps instead of pits, depending on which side of the disc is to be read).

The present invention creates high-contrast markings, including labels, images or authenticity markings (in the information area of the disc) on the master disc through special processing steps described herein. Because this is done at the master level, it is not necessary to alter the steps of making the stamper and replicas, and in this way, pre-existing stamper and replica production operations can then be used to produce replica optical data discs having a high-contrast image therein within the information area of the disc.

One preferred embodiment of the invention uses a high-contrast visible diffraction effect on the surface of the master disc in the information area of the disc to create the image, which will subsequently be transferred to the final optical data disc during replication. The data features on the disc give the appearance of a high-contrast periodic diffraction grating, visible to the unaided eye. This embodiment of the invention places a unique image, pattern or patterns on the optical disc within the information area which can be observed as contrasting to the normal or background diffraction grating effect due to the data features, giving the image appearance in the selected area.

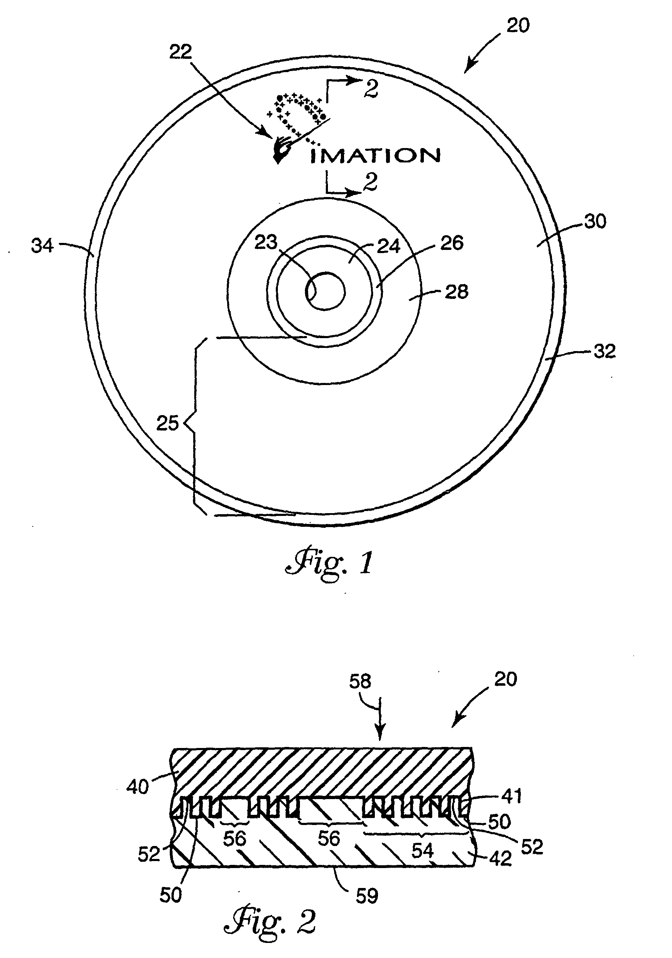

Figure 1 illustrates a readable side of an optical disc 20 having a high-contrast image 22 in accordance with the present invention. Although the Imation logo is shown, it is recognized that almost any image or character may be produced within the disc substrate. The side shown is capable of being illuminated by a laser and read. Disc 20 may be an optical disc, such as CD-ROM or a DVD optical disc. The opposite side (not shown in Figure 1) may be either an opaque, labelled, lacquer side, or a second, readable side. Disc 20 includes an inner rim 23, an inner annular ring 24, an information area 25, an outer annular ring 32 and an outer rim 34.

The information area 25 is defined as the area on the disc capable of containing user data. The information area 25 includes a pre-user data area 26, a user-data area 28, and a lead-out area 30. Pre-user data area 26 typically contains information about the disc contents, such as descriptor information. User-data area 28 contains the user accessible contents of the disc. Lead-out area 30 typically appears as a spiral track similar to that in the user-data area, but may contain no information readable by an optical disc player.

The information area 25 is the area available for information storage, even though much of it may be taken up with lead-out area 30 when the disc has little user-data encoded. The information area 25 contains high-contrast image 22, such as the Imation logo shown consisting of a design and alphanumeric characters. As shown, the high-contrast image 22 is located in the lead-out area 30 of the information area 25.

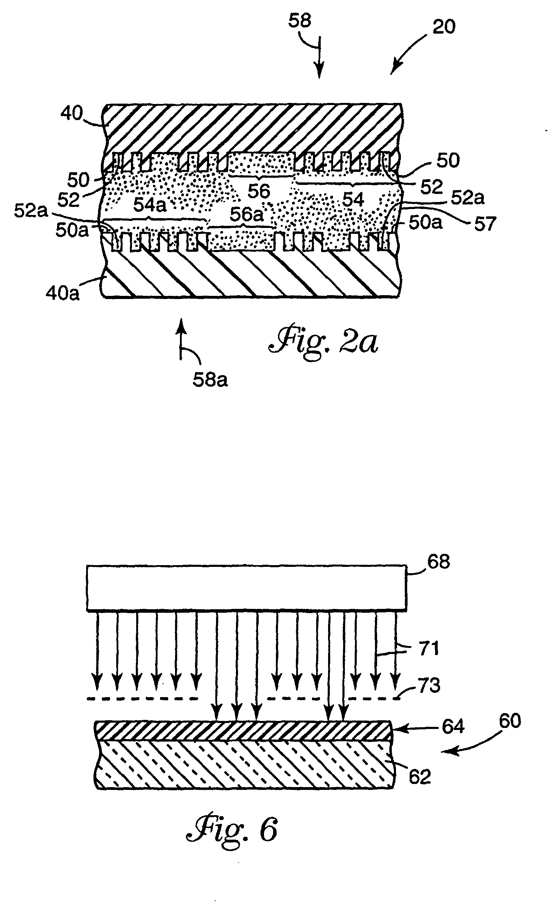

In Figure 2, a partial cross-sectional view of optical disc 20 (including image 22) taken through 2-2 of Figure 1 is shown. Disc 20 includes a data substrate 40, a reflective layer 41 and a protective substrate 42. The reflective layer 41 is interposed between the data substrate 40 and the protective substrate 42.

The data substrate 40 is generally transparent and includes a series of lands 50 and pits 52. The lands 50 and pits 52 are located within data region 54. The data substrate 40 further includes image region 56 which forms a portion of the image 22.
Image region 56, containing a portion of image 22, has no lands 52 located therein. The absence of lands 52 in image region 56 results in the optically visible high-contrast image 22.

Regions 54 and 56 are visibly different, as region 56 is devoid of the diffraction pattern. The image 22 formed by region 56 contrasted with region 54 results in a "high-contrast" image, as region 54 consists of pits 52 and region 56 has no lands 50, the lands 50 being substantially, if not completely, absent.

The reflective layer 41 extends over the data substrate 40. Specifically, the reflective layer 41 is deposited over data region 54 and image region 56, including lands 50 and pits 52. Protective layer 42 covers the reflective layer 41.

The optical disc 30 is read through the data substrate 40, indicated by read side arrow 58. In a single sided disc, the opposite side, defined as non-read side 59, may be clear or include a disc label.
In one preferred embodiment, the data substrate 40 is clear and formed of a polycarbonate. The reflective layer 41 is formed of a reflective material, such as aluminum or gold, having an approximate reflectivity rating of 70 percent. The protective substrate 42 is formed of a lacquer which may be opaque or clear. If the lacquer is clear, and no label is contained on non-read side 59, the reverse of image 22 may be viewed through non-read side 59.

A reference plane may be defined through the disc, such as pits 52. The height difference between lands 50 and pits 52 relative to the reference plane forms data feature patterns sufficiently high to be optically readable for data in the user-data area 54.

In the image area 56, the lands 50 and pits 52 are no longer optically readable, but are optically viewable, with the substantial absence of lands 50 forming high-contrast image 22. In one preferred embodiment, the lands 50 are removed at least to the level of the pits 52.

In Figure 2A, a partial cross-sectional view of a dual sided optical disc 20 in accordance with the present invention is generally shown. The dual sided optical disc 20 is formed by securing two single layer optical discs together, each single layer optical disc being similar to the single layer optical disc 20 previously described. As shown, the two single layer optical discs are secured together using an adhesive layer 57. The dual sided optical disc 20 includes a second read side 58a, and a second data substrate 40a. Similar to data substrate 40, the data substrate 40a includes lands 50a and pits 52a. Further, the second side 58a includes a second data region 54a and a second image region 56a, which forms a high-contrast image therein. With this embodiment, a high-contrast image may be provided within the information area on each side of the dual sided optical disc 20. For example, the first side of the dual sided optical disc 20 may include user data and the disc name within the information area, and the second side may include additional user data and a high-contrast image showing the table of contents of the disc 20.

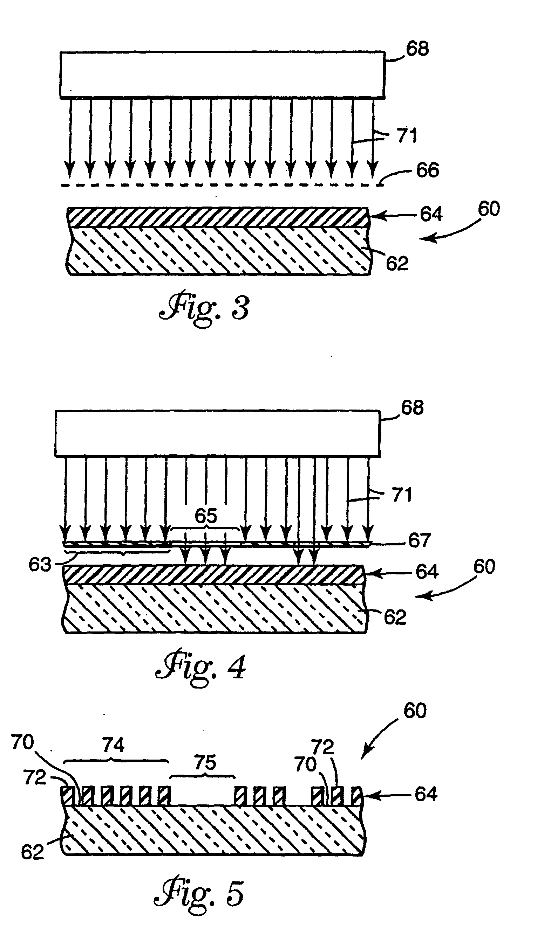

As previously discussed, a replica optical disc is created from a master disc via a metalized stamper disc. Figures 3-6 illustrate a master disc 60 in accordance with the present invention and a method of creating a master disc 60 having a diffraction pattern for producing the replica disc 20 having a high-contrast image 22 in the information area 25 of the disc 20.

In Figure 3, the process of creating master disc 60 includes providing a glass substrate 62 coated with a photosensitive layer 64. In one exemplary embodiment, the photosensitive layer 64 may be secured to the substrate 62 using a primer layer (not shown). The photosensitive layer 64 is responsive to a light source. In one embodiment, the substrate 62 is formed of glass or quartz and the photosensitive layer 64 is formed of photoresist.

A pattern mask 66 is placed over and parallel to the plane of photosensitive layer 64. In one embodiment, the pattern mask 66 may include a chrome pattern on a glass substrate. The glass substrate has an absence of chrome corresponding to the desired pattern. In a preferred embodiment, pattern mask 66 is a diffraction pattern mask. The spiral track which will result is similar to the spiral track of pits in the user-data area, but with the spiral track being a continuous groove. In another embodiment, pattern mask 66 is a random pattern mask. A random pattern mask in one embodiment is a pattern of seemingly random dots.

A light source 68 is used for transferring the mask 66 pattern to the master disc 60. In one embodiment, the light source is a UV light source. In one exemplary embodiment, the UV light source may include a mercury lamp or a laser light source. The pattern mask 66 is positioned between the master disc 60 and the light source 68. In operation, the light source 68 emitting light 71 is placed over pattern mask 66, and photosensitive layer 64 is exposed to the light 71 for a period of time sufficient to create the desired reaction. The amount of exposure reaction is dependent upon the light source and the duration of the exposure to the light source.

In one preferred embodiment, master disc 60 is a pre-recorded master, meaning it has user-data already encoded on the disc. In one method, the master disc 60 is prerecorded using a laser beam writer to record data by exposing photoresist in regions corresponding to future data pits as is well known in the art. Upon the further exposure of master disc 60 in accordance with the present invention, both user-data, diffraction patterns, and images may be developed in a development step.

It is also recognized that master disc 60 may not be prerecorded, and may have pre-user data and user-data portions encoded using a mask similar to pattern mask 66, but encoding for data pits rather than simply an arbitrary diffraction pattern. In this embodiment, a laser beam is not required to either write data or form images on the disc.

Figure 4 illustrates further processing of master disc 60 to form an image in master disc 60, corresponding to the high-contrast image 22. An image mask 67 is placed over and parallel to the plane of photosensitive layer 64. Light 71 is used to further expose photosensitive layer 64. Image mask 67 is used to form the image such as the image 22 of Figure 1, on master disc 60. In one embodiment, the image mask 67 is formed of any material opaque to UV light in the form of an image. The substrate has an absence of material corresponding to the desired image pattern. Exposure time and intensity are sufficient to insure that no lands, or lands of only very small height, will remain in exposed areas (such as an open mask area 65). In the preferred embodiment shown, the photosensitive layer 64 below the openings in mask 67 is removed entirely down to the glass substrate. The previous exposure from the pattern mask is thus added to in area 65. In closed mask areas such as area 63, no light reaches the photosensitive layer 64, leaving the previous pattern mask 66 exposure unchanged.

Referring to Fig. 5, master disc 60 is developed, leaving only portions of photosensitive layer 64. Photosensitive layer 64 now includes a pattern region 74 corresponding to mask area 63 (Figure 4) and a low, flat region 75 corresponding to transparent mask region 65. In one embodiment, pattern region 74 is a diffraction pattern including a series of master lands 72 and master pits 70.

The master disc 60 is a master of the replica discs (such as optical disc 20) which will be formed from the master disc 60 in a stamper/disc molding process. Region 75 corresponds to a portion of the image 22 on replica optical discs 20. A plane may be generally defined by the bottom of the master pits 70. Within region 75, the master lands 72 have been totally removed using the above image mask process, down to the plane defined by the bottom of the pits 70. In one preferred embodiment, the master lands 72 are totally removed within region 75, exposing the substrate 62 (and/or the adhesive layer between the photosensitive layer 64 and the substrate 62). By removing master lands 72 in a pattern corresponding to the desired image 22, a replica disc 20 formed using master disc 60 will have a high-contrast image located therein.

Master disc 60 is used to form a metalized stamper as previously described. The stampers will have ridges or stamper bumps corresponding to master pits 70. The stampers can be used to produce replica discs such as disc 20 in Figure 1, having pits 52 corresponding to master pits 70 in Figure 5. To form a dual sided optical disc, two separately stamped single layer optical discs may be secured together at their nonreadable sides using an adhesive (as shown in Figure 2A).

Referring to Fig. 6, an alternate method of forming master disc 60 in accordance with the present invention is shown. The invention includes combining the functions of the pattern mask 66 (Fig. 3) and the image mask 67 (Fig. 4) into one combination mask 73. The combination mask 73 can be utilized to eliminate one of the two light exposure steps previously described herein.

The images formed are high-contrast as they are the result of differences between the high land surfaces and the low surfaces level with the bottom of the pits, and absence of pits within the image area. The area of the disc containing the image does not allow user data to be readable by an optical disc player. The resulting high-contrast images can be used to produce more easily readable labels and images on optical discs in the disc information area relative to the images resulting from only light exposure which are optically readable. The high-contrast images are formed by reducing the height of the lands to nothing or nearly nothing, at least down to the level of the bottom of the pits. This is not possible in areas containing user data, as the data resides in the lands separating the pits. For this reason, the present method is appropriate in the information area lead-out area, which typically has a diffraction pattern, but no user data. The present invention can be practiced in the information area of the disc, but outside of the area containing user-data.

The high-contrast image can be used to both verify authenticity and describe the disc contents. In a dual sided optical disc embodiment having little or no data on one side, the high-contrast image can be used as a label, and list the disc contents on that sparsely populated side. The image may be located within a periodic diffraction pattern or a random pattern area.

The high-contrast image 22 in the resulting surface structure of the optical disc 20 is visible to the human eye. This is because the high-contrast image 22 has obliterated entire sections of land surface structure, including any position information.

The above method of forming high-contrast images in the information area of a disc does not require the use of a time-consuming laser beam recording process.

Further, since the images formed are high-contrast images, the lead-out area on a disc may be utilized for containing important information therein, such as a disc table of contents, logo, or other information.

The master disc resulting from the image mask process allows conventional disc molding processes to be used for forming replica discs.

Although the process described herein refers to a "positive" image forming process, it is recognized that a master disc could be formed having a negative image therein utilizing the same masking techniques. Specifically, the image portion of the mask would not allow light to pass through to the photosensitive layer, such that when the master disc is developed, the remaining photosensitive layer is in the form of the image, with the remaining portion being the washed away portion down to the master disc substrate.

Numerous characteristics and advantages of the invention covered by this document have been set forth in the foregoing description. It will be understood, however, that this disclosure is, in many respects, only illustrative. Changes may be made in details, particularly in matters of shape, size, and arrangement of parts without exceeding the scope of the invention. The invention's scope is, of course, defined in the language in which the appended claims are expressed.

## Claims

1. An optical disc (20) having high-contrast imagea (22) formed therein, including an information area (25) including a data content area (28) and a lead-out area (30), wherein the information area is defined as an area capable of containing data readable by an optical disc player, and data contained within the data content area, the optical disc **characterized by**:
an optically viewable high-contrast image (22) formed within the lead-out area using a masking process (67), wherein the lead-out area includes a plurality of lands (50) and pits (52), and wherein the optically viewable high-contrast image is defined by an absence (56) of lands surrounded by the area (54) including lands and pits.

2. The disc of claim 1, wherein the information area further comprises a pre-user data area (26).

3. A method of creating a high-contrast image (22) in an information area of an optical disc master (60) including a data content area and a lead-out area, wherein the information area is defined as an area capable of containing data readable by an optical disc player, the method including providing a previously recorded master disc including a substrate (62) surface having a photosensitive layer (64) thereover, the method being **characterized by** the steps of:
removing portions of said photosensitive layer within the lead-out area of the information area to expose the substrate surface including providing an image mask (67) having an image thereon, providing a light source (68), positioning said image mask between said photosensitive layer and said light source, and projecting (71) said light source through said image mask onto said photosensitive layer within the information area.

4. The method of claim 3, wherein said image mask further includes a diffraction pattern or a random pattern.

5. The method of claim 3, wherein said optical disc master includes pits in said photosensitive layer, said pits having a bottom-most level, wherein said high contrast image is formed by removing said photoresist down to a level about equal to the level of said pits.

6. The method of claim 3, wherein said high-contrast image is developed by removing said photoresist layer down to a level about equal to the level of said substrate, thereby exposing the substrate surface.

7. The method of claim 3, wherein said optical disc master includes pits in said photosensitive layer, said pits having a bottom-most level, wherein said high-contrast image is formed by removing said photoresist down to a level sufficiently close to the bottom-most level of said pits to make any data in the region of said image unreadable.

## Patentansprüche

1. Optische Platte (20) mit darin geformten kontrastreichen Bildern (22), aufweisend einen Informationsbereich (25) mit einem Dateninhaltsbereich (28) und einem Auslaufbereich (30), wobei der Informationsbereich als ein Bereich definiert ist, der für einen optischen Plattenspieler lesbare Daten enthalten kann, und Daten, die innerhalb des Dateninhaltsbereichs enthalten sind, wobei die optische Platte **gekennzeichnet ist durch**:
ein innerhalb des Auslaufbereichs unter Verwendung eines Maskenprozesses (67) geformtes, optisch sichtbares, kontrastreiches Bild (22), wobei der Auslaufbereich mehrere Lands (50) und Pits (52) aufweist, und wobei das optisch sichtbare kontrastreiche Bild **durch** eine Abwesenheit (56) von Lands definiert ist, die von dem Bereich (54), der Lands und Pits aufweist, umgeben ist.

2. Platte nach Anspruch 1, wobei der Informationsbereich ferner einen Benutzerdatenvorbereich (26) aufweist.

3. Verfahren zur Erzeugung eines kontrastreichen Bildes (22) in einem einen Dateninhaltsbereich und einen Auslaufbereich aufweisenden Informationsbereich eines optischen Plattenmasters (60), wobei der Informationsbereich als ein Bereich definiert ist, der von einem optischen Plattenspieler lesbare Daten enthalten kann, wobei das Verfahren die Bereitstellung einer vorbeschriebenen Masterplatte aufweist, die eine Substratoberfläche (62) mit einer darüberliegenden lichtempfindlichen Schicht (64) aufweist, wobei das Verfahren durch die Schritte gekennzeichnet ist:
Entfernen von Abschnitten der lichtempfindlichen Schicht innerhalb des Auslaufbereichs des Informationsbereichs, um die Substratoberfläche freizulegen, einschließlich Bereitstellen einer Bildmaske (67) mit einem Bild, Bereitstellen einer Lichtquelle (68), Anordnen der Bildmaske zwischen der lichtempfindlichen Schicht und der Lichtquelle und Projizieren (71) des Lichts durch die Bildmaske auf die lichtempfindliche Schicht innerhalb des Informationsbereichs.

4. Verfahren nach Anspruch 3, wobei die Bildmaske ferner ein Beugungsmuster oder ein Zufallsmuster aufweist.

5. Verfahren nach Anspruch 3, wobei der optische Plattenmaster Pits in der lichtempfindlichen Schicht aufweist, wobei die Pits ein Bodenniveau haben, wobei das kontrastreiche. Bild mittels Entfernen des Photoresistlacks bis hinunter auf ein Niveau ungefähr gleich dem Niveau der Pits geformt wird.

6. Verfahren nach Anspruch 3, wobei das kontrastreiche Bild durch Entfernen der Photoresistschicht bis hinunter auf ein Niveau, das gleich dem Niveau des Substrats ist, entwickelt wird, wobei die Substratoberfläche freigelegt wird.

7. Verfahren nach Anspruch 3, wobei der optische Plattenmaster Pits in der lichtempfindlichen Schicht aufweist, wobei die Pits ein Bodenniveau haben, wobei das kontrastreiche Bild dadurch geformt wird, daß der Photoresistlack bis hinunter auf ein Niveau entfernt wird, das genügend nahe am Bodenniveau der Pits ist, um irgendwelche Daten im Bereich des Bildes unlesbar zu machen.

## Revendications

1. Un disque optique (20) dans lequel sont formées des images (22) à haut contraste, qui inclut une zone d'information (25) incluant une zone de contenu de données (28) et une zone de fin d'enregistrement (30), la zone d'information étant définie comme une zone susceptible de contenir des données lisibles par un lecteur de disque optique, et des données contenues à l'intérieur de la zone de contenu de données, le disque optique étant **caractérisé par**:
une image (22) à haut contraste visible optiquement, formée à l'intérieur de la zone de fin d'enregistrement en utilisant un processus de masquage (67), la zone de fin d'enregistrement incluant une série de reliefs (50) et de puits (52), et l'image à haut contraste visible optiquement étant définie par une absence (56) de reliefs entourée par la zone (54) incluant des reliefs et des puits.

2. Le disque selon la revendication 1, dans lequel la zone d'information comprend en outre une zone initiale (26) précédent les données d'utilisateur.

3. Un procédé de création d'une image (22) à haut contraste dans une zone d'information d'un disque optique maître (60) incluant une zone de contenu et une zone de fin d'enregistrement, dans lequel la zone d'information est définie comme une zone susceptible de contenir des données lisibles par un lecteur de disque optique, le procédé incluant l'étape consistant à agencer un disque maître précédemment enregistré qui inclut une surface de substrat (62) recouverte d'une couche (64) de résine photosensible, le procédé étant **caractérisé par** les étapes consistant à:
enlever des fractions de la couche photosensible à l'intérieur de la zone de fin d'enregistrement de la zone d'information pour exposer la surface du substrat, ce qui inclut d'agencer un masque (67) d'image qui porte une image, agencer une source lumineuse (68), positionner ledit masque d'image entre ladite couche photosensible et ladite source lumineuse, et projeter (71) ladite source lumineuse à travers ledit masque d'image sur ladite couche photosensible à l'intérieur de ladite zone d'information.

4. Le procédé selon la revendication 3, dans lequel ledit masque d'image inclut en outre une configuration de diffraction ou une configuration aléatoire.

5. Le procédé selon la revendication 3, dans lequel ledit disque optique maître inclut des puits dans la couche photosensible, lesdits puits comportant un niveau le plus bas, et dans lequel ladite image à haut contraste est formée par enlèvement de ladite résine photosensible en descendant jusqu'à un niveau approximativement égal au niveau desdits puits.

6. Le procédé selon la revendication 3, dans lequel ladite image à haut contraste est développée par enlèvement de ladite couche de résine photosensible en descendant jusqu'à un niveau approximativement égal au niveau dudit substrat, en exposant ainsi la surface du substrat.

7. Le procédé selon la revendication 3, dans lequel ledit disque optique maître inclut des puits dans la couche photosensible, lesdits puits comportant un niveau le plus bas, et dans lequel ladite image à haut contraste est formée par enlèvement de ladite résine photosensible en descendant jusqu'à un niveau suffisamment proche du niveau le plus bas desdits puits pour rendre illisible toutes données dans la région de ladite image.
